# FASCICULE DE BREVET EUROPEEN

(11) **EP 1 920 178 B1**
(45) Date de publication et mention de la délivrance du brevet: **07.10.2009**
(21) Numéro de dépôt: 06794338.1
(22) Date de dépôt: 17.08.2006
(51) Int. Cl.: F16L 7/00, B62D 25/14

(54) **DISPOSITIF DE POSITIONNEMENT ET D'IMMOBILISATION D'UN CONDUIT DANS UN CORPS CREUX ET POUTRE D'UNE TRAVERSE DE PLANCHE DE BORD MUNIE D'UN TEL DISPOSITIF**
VORRICHTUNG ZUM POSITIONIEREN UND VERRIEGELN EINES KANALS IN EINEM HOHLEN KÖRPER UND SOLCH EINE VORRICHTUNG UMFASSENDER TRÄGER EINES ARMATURENBRETT-QUERGLIEDS
DEVICE FOR POSITIONING AND LOCKING A DUCT IN A HOLLOW BODY AND BEAM OF A DASHBOARD CROSSMEMBER COMPRISING ONE SUCH DEVICE

(30) Priorité: 31.08.2005 FR 0508939
(43) Date de publication de la demande: 14.05.2008
(73) Titulaire: Faurecia Interieur Industrie, 92000 Nanterre (FR)
(72) Inventeur: DESCAMPS, Albin c/o Faurecia Interieur Industrie, F-60114 Meru (FR)
(74) Mandataire: Domenego, Bertrand
(86) Numéro de dépôt international: PCT/FR2006/001957
(87) Numéro de publication internationale: WO 2007/026064

(56) Documents cités:
- WO-A-20/05032866
- WO-A-20/05037631
- DE-A1- 4 232 847

## Description

La présente invention concerne un dispositif de positionnement et d'immobilisation d'un conduit dans un corps creux, comme par exempte un conduit de ventilation dans une poutre d'une traverse de planche de bord d'un véhicule automobile (voir le document DE-A-42 32 847).

L'invention concerne également une poutre d'une traverse de planche de bord comportant un conduit de ventilation maintenu par un tel dispositif.

Dans de nombreux domaines industriels, des conduits comme par exemple des conduits de ventilation, sont placés dans des corps creux comportant un canal s'étendant suivant la longueur du corps creux et destiné à recevoir ce conduit.

C'est le cas par exemple de la poutre de traverse d'une planche de bord d'un véhicule automobile qui forme un canal suivant la longueur de la poutre renfermant un conduit de ventilation.

Ainsi, les traverses de planche de bord, outre leur fonction dans la rigidité du véhicule, sont utilisées pour amener le flux d'air provenant du climatiseur ou de l'appareil de chauffage. Elles comportent donc un conduit en matière isolante pour canaliser ce flux d'air jusqu'à l'habitacle en préservant ses propriétés calorifiques.

En effet, la poutre des traverses de planche de bord est généralement en métal si bien que faire passer l'air directement dans la poutre induit des pertes calorifiques importantes de l'air transporté. Il est donc nécessaire de doubler la poutre métallique par une matière moins conductrice que le métal. C'est pourquoi les poutres des traverses des planches de bord des véhicules automobiles comprennent le plus souvent un conduit de ventilation en matière plastique rigide disposé à l'intérieur des poutres.

Mais, l'introduction et le positionnement d'un tel conduit pose des problèmes car il s'agit le plus souvent d'un montage qui s'effectue en aveugle ne permettant pas de positionner avec précision dans toutes les directions le conduit de ventilation ce qui pose des problèmes pour l'accostage des autres composants sur la planche de bord, comme par exemple les aérateurs.

De plus, il est indispensable d'assurer le maintien du conduit dans la poutre de la traverse afin d'éviter que ce conduit vibre ou se déplace à l'intérieur de cette poutre.

A cet effet, on connaît une poutre d'une traverse de planche de bord dans laquelle le conduit intérieur est surmoulé dans la poutre par une matière plastique.

Mais, ce mode de réalisation est complexe à mettre en oeuvre surtout dans le cas d'une production en grande série.

On connaît aussi une poutre métallique qui comporte au moins un canal tubulaire et dans lequel le conduit intérieur est introduit par glissement, si bien qu'il ne présente aucune partie émergeante.

Dans ce cas, il se pose le problème du positionnement du conduit intérieur ainsi que de la liaison de ce conduit par rapport à l'aérateur en respectant les contraintes aérauliques de l'ensemble.

Le but de l'invention est donc de résoudre ce problème.

L'invention a donc pour objet un dispositif de positionnement et d'immobilisation d'un conduit dans un corps creux, ledit corps creux comportant, à une première extrémité, un passage d'introduction du conduit par coulissement dans ce corps creux et, à une seconde extrémité, une plaque de fixation du corps creux et formant une butée pour le conduit, **caractérisé en ce qu'**il comprend un élément en saillie ménagé sur l'extrémité du conduit destinée à être appliquée sur la plaque, une découpe ménagée dans la plaque et de forme sensiblement complémentaire à l'élément en saillie et des moyens de blocage dudit élément en saillie dans ladite découpe.

Selon d'autres caractéristiques de l'invention :
- l'élément en saillie est formé par une patte en forme de L,
- la découpe comporte un rebord s'étendant sensiblement perpendiculairement à la plaque et vers l'extérieur de ladite plaque par rapport au sens d'introduction du conduit dans le corps creux, et
- les moyens de blocage sont formés par au moins un organe de vissage pour la fixation de la patte sur le rebord.

L'invention a également pour objet une poutre d'une traverse de planche de bord de véhicule automobile comportant un conduit de ventilation, **caractérisé en ce que** le conduit de ventilation est positionné et immobilisé par au moins un dispositif tel que précédemment mentionné.

L'invention sera mieux comprise à la lecture de la description qui va suivre, donnée uniquement à titre d'exemple et faite en référence aux dessins annexés, sur lesquels :
- la Fig. 1 est une vue schématique en perspective d'une partie d'une traverse d'une planche de bord de véhicule automobile comportant une poutre et un conduit de ventilation munis d'un dispositif de positionnement et d'immobilisation, conforme à l'invention,
- la Fig. 2 est une vue schématique en perspective de la poutre de la traverse,
- la Fig. 3 est une vue schématique en perspective de la plaque d'extrémité de la poutre,
- la Fig. 4 est une vue schématique en perspective du conduit de ventilation de la traverse, et
- la Fig. 5 est une vue schématique en perspective montrant le dispositif de positionnement et d'immobilisation avec le conduit de ventilation placé dans la poutre.

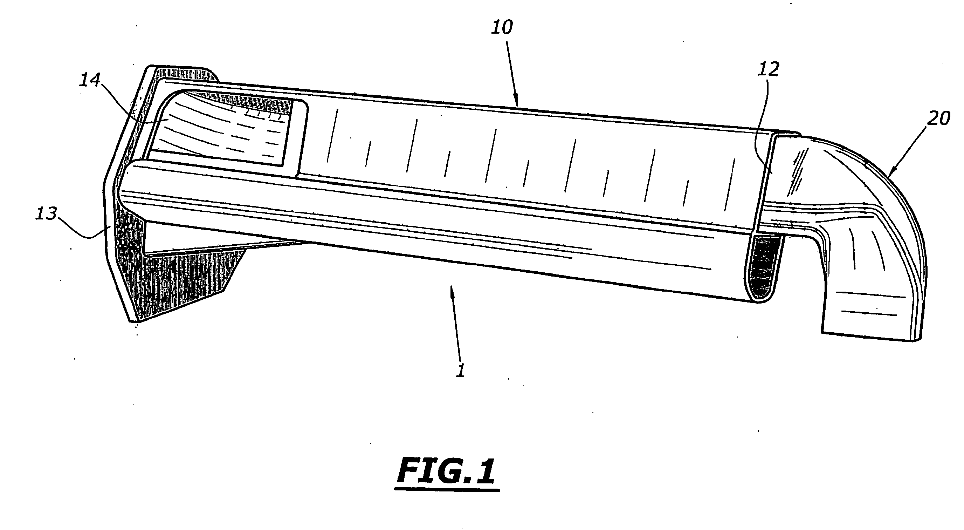

Sur la Fig. 1, on a représenté schématiquement une partie d'une traverse d'une planche de bord de véhicule automobile et qui est désignée par la référence générale 1. De manière classique, cette traverse assure une fonction structurelle pour le véhicule, c'est à dire qu'elle participe à la rigidification de la structure de ce véhicule. Elle assure également le transport de l'air vers les passagers de véhicule et enfin le support de certains composants tels qu'une colonne de direction et un dispositif de sécurité à sac gonflable.

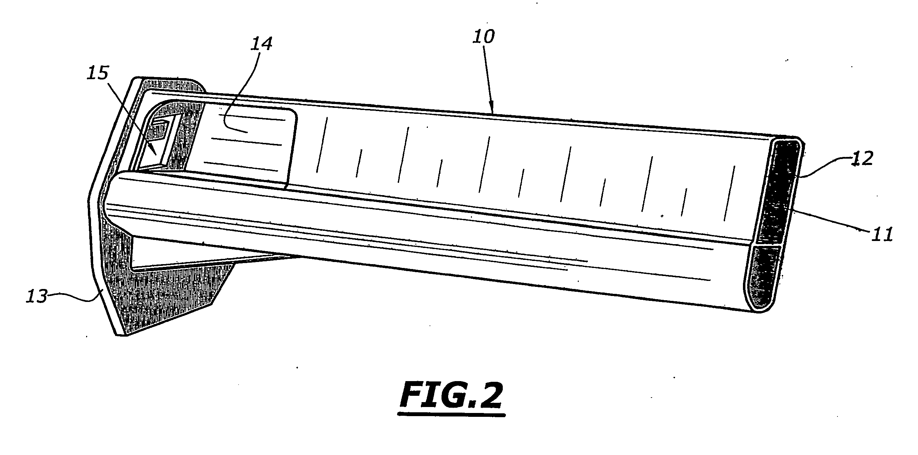

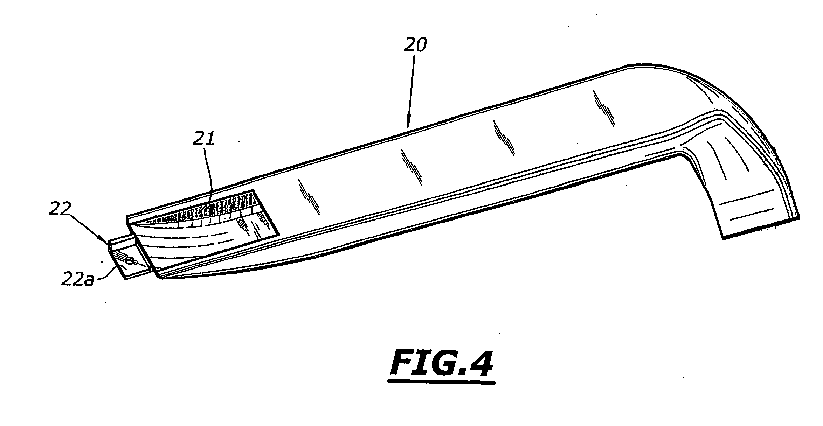

La traverse 1 se compose d'une poutre désignée dans son ensemble par la référence 10 (Fig. 2) et un conduit de ventilation désigné dans son ensemble par la référence 20 (Fig. 4).

La poutre 10 constituant un corps creux se présente sous la forme d'une profilé formant un canal 11 suivant la longueur de cette poutre et qui comporte, à une première extrémité, un passage 12 d'introduction du conduit 20 par coulissement dans ledit canal. La poutre 10 comporte également, à une seconde extrémité, une plaque 13 de fixation sur la structure de la caisse du véhicule automobile.

Cette plaque 13 constitue une butée pour le conduit 20 lorsqu'il est positionné dans le canal 11 de la poutre 10. La poutre 10 est également munie d'une ouverture 14 disposée sur la face de la poutre 10 destinée à être dirigée vers l'habitacle du véhicule, pour le positionnement d'un aérateur, non représenté.

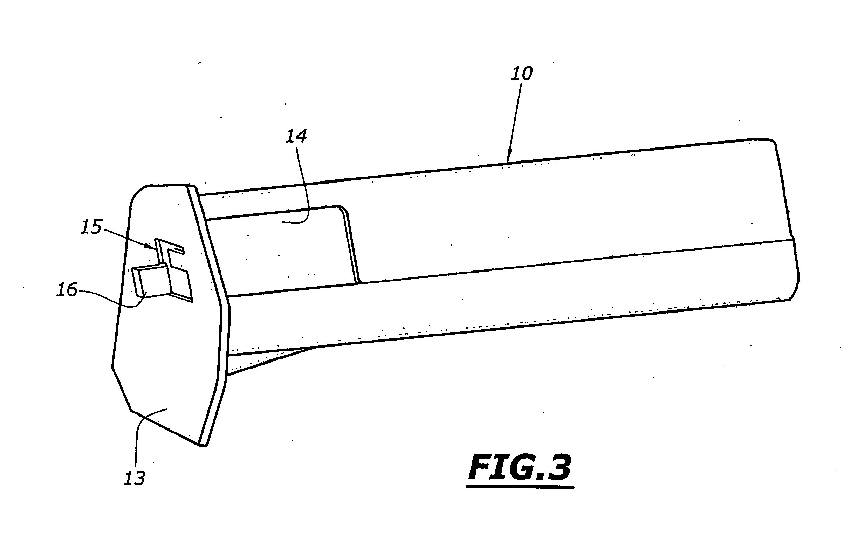

Ainsi que montré à la Fig. 3, la plaque d'extrémité 13 de la poutre 10 comporte une découpe 15 présentant la forme générale d'un L. Cette découpe 15 comporte un rebord 16 s'étendant sensiblement perpendiculairement à la plaque d'extrémité 13 et dirigé vers l'extérieur de ladite plaque 13 par rapport au sens d'introduction du conduit dans le canal 11 de la poutre 10.

Le conduit de ventilation 20 réalisé en un matériau isolant rigide comporte également une ouverture 21 destinée à être placée en regard de l'ouverture 14 de la poutre 10 pour diffuser l'air à l'intérieur de l'habitable par l'intermédiaire de l'aérateur.

Ainsi que montré plus particulièrement à la Fig. 4, l'extrémité du conduit 20 destiné à être appliquée sur la plaque d'extrémité 13 de la poutre 10, comporte un élément en saillie formé par une patte 22 en forme de L.

La découpe 15 et la patte 22 ont donc une forme sensiblement complémentaire.

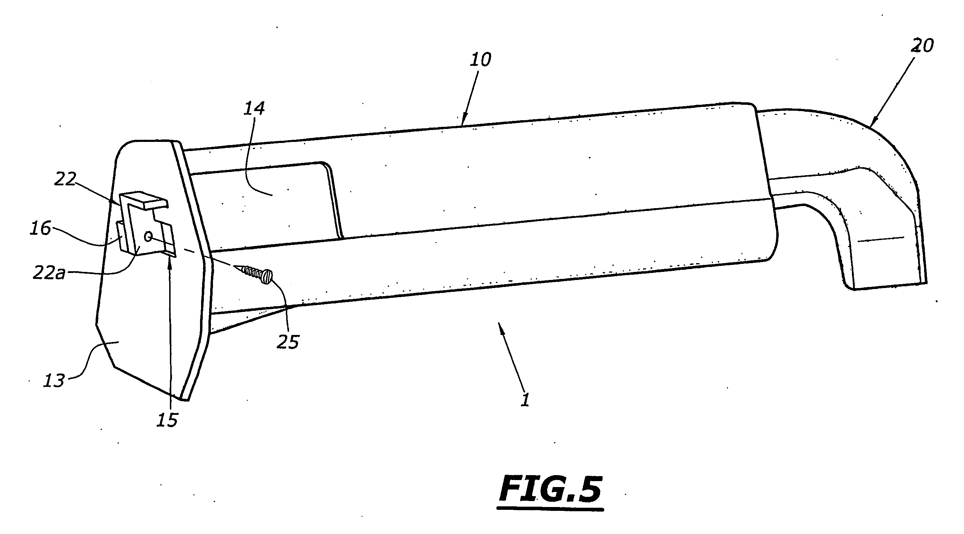

Lors de l'introduction du conduit de ventilation 20 dans le canal 11 par l'ouverture 12 de la poutre 10, l'extrémité de ce conduit 20 vient en butée contre la plaque 13 et la patte 22 traverse la découpe 15, ainsi que montré à la Fig. 5.

Dans cette position, la branche 22a de la patte 22 recouvre le bord 16 de la plaqué d'extrémité 13 et l'immobilisation du conduit 20 à l'intérieur de la poutre 10 est réalisée par des moyens de blocage qui sont formés par au moins une vis 25 (Fig. 5) qui traverse la branche 22a de la patte 22 et qui pénètre dans le rebord 16.

Le dispositif selon l'invention permet donc d'assurer le bon positionnement du conduit de ventilation dans toutes les directions et cela par des moyens économiques et simples à mettre en oeuvre.

## Revendications

1. Dispositif de positionnement et d'immobilisation d'un conduit (20) dans un corps creux (10), ledit dispositif comprenant le conduit (20) et le corps creux (10), ledit corps creux (10) comportant, à une première extrémité, un passage (12) d'introduction du conduit (20) par coulissement dans ce corps creux (10) et, à une seconde extrémité, une plaque (13) de fixation du corps creux (10) et formant une butée pour le conduit (20), **caractérisé en ce qu'**il comprend un élément en saillie (22) ménagé sur l'extrémité du conduit (20) destinée à être appliquée sur la plaque (13), une découpe (15) ménagée dans la plaque (13) et de forme sensiblement complémentaire à l'élément en saillie (22) et des moyens (25) de blocage dudit élément en saillie (22) dans ladite découpe (15).

2. Dispositif selon la revendication 1, **caractérisé en ce que** l'élément en saillie est formé par une patte (22) en forme de L.

3. Dispositif selon la revendication 1 ou 2, **caractérisé en ce que** la découpe (15) comporte un rebord (16) s'étendant sensiblement perpendiculairement à la plaque (13) et dirigé vers l'extérieur de ladite plaque (13) par rapport au sens d'introduction du conduit (20) dans le corps creux (10).

4. Dispositif selon l'une quelconque des revendications 1 à 3, **caractérisé en ce que** les moyens de blocage sont formés par au moins un organe de vissage (25) pour la fixation de la patte (22) sur le rebord (16).

5. Poutre d'une traverse de planche de bord de véhicule automobile comportant un conduit (20) de ventilation, **caractérisé en ce que** le conduit de ventilation (20) est positionné immobilisé par au moins un dispositif selon l'une quelconque des revendications 1 à 4.

## Claims

1. A device for positioning and locking a duct (20) in a hollow body (10), said device comprising the duct (20) and the hollow body (10), said hollow body (10) comprising, at a first end, a passage (12) for introducing the duct (20) by sliding it into this hollow body (10), and at a second end, a plate (13) for fixing the hollow body (10) and forming a limit stop for the duct (20), **characterised in that** it comprises a projecting element (22) on the end of the duct (20) that is intended to be applied against the plate (13), a slot (15) in the plate (13) and of a shape which is substantially complementary to the projecting element (22), and means (25) for locking said projecting element (22) in said slot (15).

2. The device according to Claim 1, **characterised in that** the projecting element is formed by an L-shaped leg (22).

3. The device according to Claim 1 or 2, **characterised in that** the slot (15) comprises an edge (16) extending substantially perpendicularly to the plate (13) and directed towards the outside of said plate (13) in relation to the direction of introducing the slot (20) into the hollow body (10).

4. The device according to any of Claims 1 to 3, **characterised in that** the locking means are formed by at least one screwing component (25) for fixing the leg (22) onto the edge (16).

5. A motor vehicle dashboard crossmember beam comprising a ventilation duct (20), **characterised in that** the ventilation duct (20) is positioned locked by at least one device according to any of Claims 1 to 4.

## Patentansprüche

1. Vorrichtung zum Positionieren und Verriegeln eines Kanals in einem Hohlkörper (10), welcher Hohlkörper (10) an einem Ende einen Einlaß (12) für den Kanal (20) zur Verschiebung innerhalb des Hohlkörpers (10) umfaßt, und an seinem zweiten Ende eine Befestigungsplatte (13) des Hohlkörpers (10) in Form eines Anschlags für den Kanal (20), **dadurch gekennzeichnet, dass** die Vorrichtung ein Vorsprungselement (22) umfaßt, das an dem Ende des Kanals (20) zur Anlage auf der Platte (13) vorgesehen ist, und einen Einschnitt (15), der in der Platte (13) angebracht ist und dessen Form im wesentlichen dem Vorsprungselement (22) entspricht, sowie Mittel (25) zur Verriegelung des Vorsprungselements (22) in dem Einschnitt (15).

2. Vorrichtung gemäß Anspruch 1, **dadurch gekennzeichnet, dass** das Vorsprungselement die Form einer L-förmigen Klaue (22) aufweist.

3. Vorrichtung gemäß Anspruch 1 oder 2, **dadurch gekennzeichnet, dass** der Einschnitt (15) einen Rand (16) aufweist, der sich im wesentlichen senkrecht zu der Platte (13) erstreckt und der sich zum Äußeren der Platte (13) bezüglich der Einschubrichtung des Kanals (20) in den Hohlkörper (10) erstreckt.

4. Vorrichtung gemäß einem der Ansprüche 1 bis 3, **dadurch gekennzeichnet, dass** die Verriegelungsmittel gebildet werden durch zumindest ein Verschraubungsorgan (25) zur Befestigung der Klaue (22) auf dem Rand (16).

5. Querträger eines Armaturenbretts eines Kraftfahrzeugs, umfassend einen Belüftungskanal (20), **dadurch gekennzeichnet, dass** der Belüftungskanal (20) durch zumindest eine Vorrichtung gemäß den Ansprüchen 1 bis 4 befestigt ist.
